# EUROPÄISCHE PATENTANMELDUNG

(11) **EP 1 545 158 A2**
(43) Veröffentlichungstag der Anmeldung: **22.06.2005**
(21) Anmeldenummer: 04027825.1
(22) Anmeldetag: 24.11.2004
(51) Int. Cl.: H05B 3/50

(54) **Heizeinrichtung, insbesondere für ein thermostatisches Arbeitselement eines Thermostatventils**

(30) Priorität: 20.12.2003 DE 10360169
(71) Anmelder: Gustav Wahler GmbH u. Co.KG, 73730 Esslingen (DE)
(72) Erfinder: Wahler, Hans, Dipl.-Ing., 73728 Esslingen (DE); Gebauer, Markus, Dipl.-Ing., 70563 Stuttgart (DE)
(74) Vertreter: Kratzsch, Volkhard, Dipl.-Ing.

(57) **Zusammenfassung**

Die Erfindung bezieht sich auf eine Heizeinrichtung (10), insbesondere für ein thermostatisches Arbeitselement (11) eines Thermostatventils (12), mit einer elektrischen Heizpatrone (13), die innerhalb eines Gehäuses (16) ein elektrisches Heizelement (40) aufweist, das über herausgeführte elektrische Leitungen (44, 45) von einer elektrischen Stromquelle speisbar ist. Das Heizelement (40) ist aus zumindest einem Heizleiter (41) mit temperaturabhängigem Widerstand gebildet, insbesondere derart, dass der Heizleiter während seiner Einschaltphase die Heizleistung in Abhängigkeit von dem sich ändernden Widerstand regelt, insbesondere mit zunehmendem Widerstand verringert (Fig. 2).

## Beschreibung

Die Erfindung bezieht sich auf eine Heizeinrichtung, insbesondere für ein thermostatisches Arbeitselement eines Thermostatventils, der im Oberbegriff des Anspruchs 1 genannten Art.

Bekannte Heizeinrichtungen dieser Art (DE 203 08 941 U1) machen es möglich, die Kühlmitteltemperatur im Kühlkreislauf einer Brennkraftmaschine in gewissen Bereichen insbesondere in Abhängigkeit verschiedener äußerer Parameter einzustellen. Insbesondere kann der Öffnungszeitpunkt und auch die Reaktionszeit des thermostatischen Arbeitselementes durch die Heizeinrichtung beeinflusst werden. Dabei ist jedoch zu beachten, dass mit steigender Leistung auch die Stromstärke zunimmt, für die aus verschiedenen Gründen eine obere Grenze gesetzt ist. Bekannte Heizeinrichtungen sind deswegen so gestaltet, dass bei Einschaltung dieser eine frühere Öffnung eines Thermostatventils etwa ab einer Kühlmitteltemperatur von 50°C möglich ist. Eine größere Heizleistung der Heizeinrichtung verbietet sich u.a. auch zur Vermeidung von Beschädigungen einzelner Bauteile des thermostatischen Arbeitselements.

Der Erfindung liegt die Aufgabe zugrunde, eine Heizeinrichtung der eingangs genannten Art zu schaffen, die es möglich macht, selbständig die jeweils benötigte Heizleistung zu regeln, ohne dass dazu etwa in einem Steuergerät einer Brennkraftmaschine eine besondere Leistungsregelungsfunktion dafür vorgehalten werden muss.

Die Aufgabe ist bei einer Heizeinrichtung der eingangs genannten Art gemäß der Erfindung durch die Merkmale im Anspruch 1 gelöst. Weitere vorteilhafte Erfindungsmerkmale und Ausgestaltungen ergeben sich aus den Ansprüchen 2 bis 9. Die Heizeinrichtung gemäß der Erfindung macht es möglich, in einem unteren Temperaturbereich, insbesondere weit unterhalb von etwa 50°C, eine große Heizleistung bereitzustellen, die ein frühzeitiges Öffnen eines Thermostatventils bei derartigen niedrigen Temperaturen ermöglicht und die bei zunehmenden höheren Temperaturen ein schnelleres Öffnen des Thermostatventils zur Folge hat. Ferner ermöglicht es die erfindungsgemäße Heizeinrichtung, dass deren Heizleistung mit zunehmender Kühlmitteltemperatur selbsttätig reduziert wird, insbesondere in einem höheren Temperaturbereich, wodurch vermieden wird, dass bei sonst etwa andauernder höherer Heizleistung Bauteile des thermostatischen Arbeitselements beschädigt werden. Ein mit einer solchen Heizeinrichtung ausgestattetes thermostatisches Arbeitselement ist daher in der Lage, selbsttätig die von diesem jeweils benötigte Heizleistung zu regeln, und dies in einfacher und kostengünstiger Weise.

Gegenstand der Erfindung ist ferner ein Thermostatventil für den Kühlmittelkreislauf einer Brennkraftmaschine mit den Merkmalen im Anspruch 10. Weitere vorteilhafte Erfindungsmerkmale und Ausgestaltungen dazu ergeben sich aus den Ansprüchen 11 und 12. Ein solches Thermostatventil kann somit durch große Heizleistung des Heizelements in unteren Temperaturbereichen frühzeitig zum Öffnen gebracht werden und öffnet dann schneller und ggf. mit größerem Öffnungshub, wobei in einem oberen Temperaturbereich, z. B. beginnend etwa ab 100°C, die Heizleistung des Heizelements selbsttätig durch Zunahme des Widerstands reduziert wird und Beschädigungen von Bauteilen des thermostatischen Arbeitselements vermieden sind.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommen, wodurch jedoch alle diese Anspruchsmerkmale als an dieser Stelle ausdrücklich und erfindungswesentlich offenbart zu geltend haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in den Zeichnungen gezeigten Ausführungsbeispielen näher erläutert. Es zeigen:
- Fig. 1: eine schematische, teilweise geschnittene Seitenansicht einer Heizeinrichtung insbesondere für ein thermostatisches Arbeitselement eines Thermostatventils,
- Fig. 2: einen schematischen Längsschnitt eines Teils der Heizeinrichtung in Fig. 1, in vergrößertem Maßstab,
- Fig. 3: eine schematische, teilweise geschnittene Seitenansicht eines Thermostatventils mit Heizeinrichtung.

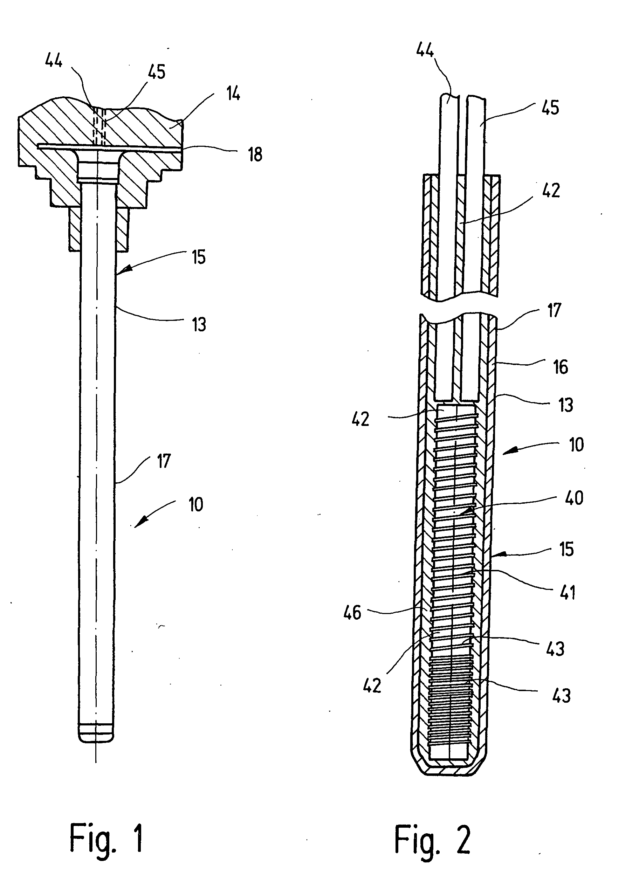

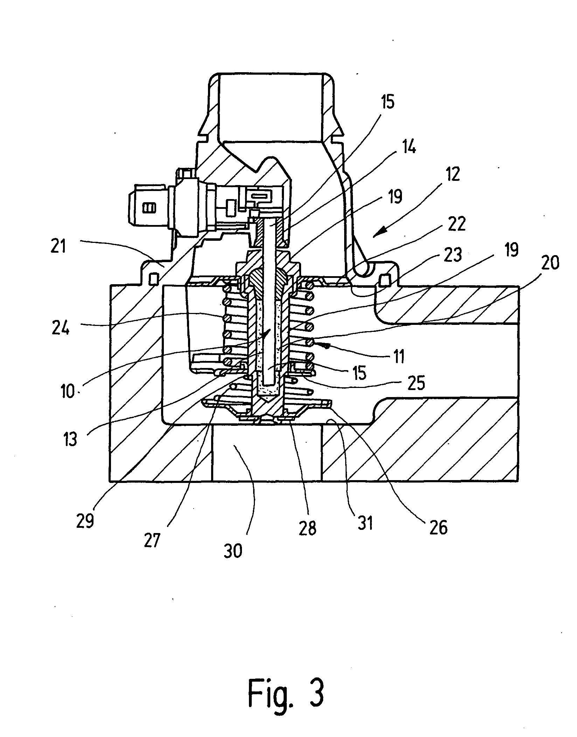

Während in Fig. 1 und 2 allein eine Heizeinrichtung 10 gezeigt ist, die insbesondere für ein thermostatisches Arbeitselement 11 eines Thermostatventils 12 geeignet ist, ist in Fig. 3 ein derartiges Thermostatventil 12 schematisch dargestellt, das ein thermostatisches Arbeitselement 11, versehen mit einer Heizeinrichtung 10, aufweist.

Die in Fig. 1 und 2 gezeigte Heizeinrichtung 10 weist eine elektrische Heizpatrone 13 mit Halter 14 auf. Die Heizpatrone 13 bildet in dieser Form einen Kolben 15 des thermostatischen Arbeitselements 11. Die Heizpatrone 13 weist im einzelnen ein Gehäuse 16 in Form einer Rohrhülse 17 auf, die am in der Zeichnung unteren Ende geschlossen ist und am oberen Ende z. B. einen Flansch 18 trägt. Die Heizpatrone 13 ist mit diesem oberen Endbereich mit dem Flansch 18 im Inneren des Halters 14 aufgenommen.

Wie in Fig. 3 beim dortigen Thermostatventil 12 ersichtlich ist, taucht die einen Kolben 15 bildende Heizpatrone 13 in ein Gehäuse 19 ein, das einen Dehnstoff 20, z. B. ein Wachs, enthält. Mit dem in der Zeichnung oberen Ende ist dieser Kolben 15 an einem Ventilgehäuse 21 unverschiebbar abgestützt. Bei einer Erwärmung des Dehnstoffes 20 und Volumenzunahme dieses kann sich das Gehäuse 19 des Thermostatventils 12 in Fig. 3 nach unten relativ zum nicht verschiebbaren Kolben 15 in Ventilöffnungsrichtung verschieben. Das Gehäuse 19 trägt ein Ventilglied 22 z. B. in Form eines Ventiltellers, dem im Ventilgehäuse 21 eine Ventilsitzfläche 23 zugeordnet ist, die vom Ventilglied 22 beherrscht wird. Das Ventilglied 22 ist von einer Schließfeder 24 in Schließrichtung beaufschlagt, die mit ihrem oberen Ende am Ventilglied 22 in Schließrichtung abgestützt ist und mit ihrem gegenüberliegenden unteren Ende an einem Stützglied 25 aufsitzt, das am Ventilgehäuse 21 unverschiebbar festgelegt und vom Gehäuse 19 axial verschiebbar durchsetzt ist. Am unteren Ende des Gehäuses 19 ist ein zweites Ventilglied 26 auf dem Gehäuse 19 verschiebbar gegen die Wirkung einer Feder 27 gehalten, mittels der das zweite Ventilglied 26 gegen einen Anschlag 28 des Gehäuses 19 gedrückt ist. Die Feder 27 stützt sich mit dem anderen, dem Ventilglied 26 gegenüberliegenden Ende an einem Absatz 29 des Gehäuses 19 ab. Das zweite Ventilglied 26 ist z. B. ebenfalls als Ventilteller ausgebildet und dient der Steuerung einer Bypassöffnung 30 im Ventilgehäuse 21. Im gezeigten Zustand des Thermostatventils 12 befindet sich dessen Hauptventil, nämlich Ventilglied 22, in der Schließstellung, während dessen Bypassventil, nämlich Ventilglied 26, sich in der die Bypassöffnung 30 freigebenden Stellung befindet. Bei Erwärmung des Dehnstoffs 20 und Volumenzunahme dieses verschiebt sich das Gehäuse 19 relativ zum Kolben 15 gegen die Wirkung der Schließfeder 24 in Fig. 3 nach unten, wobei das Ventilglied 22 zunehmend den Durchgang im Bereich der Ventilsitzfläche 23 freigibt, während das andere Ventilglied 26 zunehmend den Durchgang durch die Bypassöffnung 30 verringert bis hin zum Verschluss der Bypassöffnung 30 durch Aufsitzen des Ventilgliedes 26 an einer zugeordneten Ventilsitzfläche 31.

Die den Kolben 15 bildende Heizpatrone 13 enthält innerhalb des Gehäuses 16 ein elektrisches Heizelement 40, welches zumindest einen Heizleiter 41 aufweist, der aus zumindest einem auf einen Träger 42 gewickelten Heizdraht 43 besteht. Dieses elektrische Heizelement 40 ist über herausgeführte elektrische Leitungen 44, 45 von einer nicht weiter gezeigten elektrischen Stromquelle, z. B. vom Bordnetz des Fahrzeugs, in das das Thermostatventil 12 eingebaut ist, speisbar. Der Träger 42 mit Heizleiter 41 ist von einer Ummantelung, 46 umgeben, die vom Gehäuse 16 umschlossen ist.

Generell ist durch einen als elektrische Heizpatrone 13 ausgebildeten Kolben 15 beschriebener Art die Kühlmitteltemperatur einer Brennkraftmaschine in gewissen Grenzen einstellbar, abhängig von verschiedenen Einflussgrößen und bedarfsorientiert. Auch wenn die Heizpatrone 13 in verschiedenen Leistungs- und Spannungsausführungen bereitgestellt werden kann und durch die jeweilige Heizleistung der Heizpatrone 13 die Reaktionszeit des Arbeitselements 11 beeinflusst werden kann, ist jedoch zu beachten, dass mit steigender Leistung auch die Stromstärke zunimmt, für die aus verschiedenen Gründen eine obere Grenze gesetzt ist.

Üblicherweise ist ein thermostatisches Arbeitselement mit herkömmlichem, nicht beheizbaren Kolben 15 so eingestellt, dass das Thermostatvenil 12 erst bei einer Temperatur von etwa 100°C im Bereich seines Hauptventils öffnet und mit einem Hub beginnt. Ein anderes herkömmliches Arbeitselement 11, das mit einem als Heizpatrone 13 ausgebildeten Kolben 15 versehen ist, ist hingegen in der Lage, schon bei einer Temperatur etwa von 50°C allmählich zu öffnen, wobei allerdings der Öffnungshub des Ventilgliedes 22 mit weiterhin steigender Temperatur z. B. etwa bis 100°C nur langsam zunimmt, sich somit eine relativ flache Temperatur-Hub-Kurve ergibt.

Bei der Steuerung bzw. Regelung der Kühlmitteltemperatur insbesondere für Brennkraftmaschinen wird bei modernen Kühlmittelkreisläufen angestrebt, dass das Regelventil im Kühlmittelkreislauf sich so verhält, wie ein unabhängig von der Kühlmitteltemperatur betätigtes Ventil, z. B. ein solches, das in bekannter Weise mittels eines besonderen Stellantriebes in Abhängigkeit verschiedenster Kenngrößen betätigt wird. Ein derartiges mittels Stellantriebes in Abhängigkeit äußerer Parameter verstellbares Ventil mit Regeleinrichtung unter Einschluss der Regelungsfunktion in einem Steuergerät der Brennkraftmaschine ist aufwendig und teuer. Um dies zu vermeiden und ein thermostatisches Arbeitselement 12 dennoch einsetzen zu können, sieht die Erfindung in besonders einfacher Weise vor, dass der zumindest eine Heizleiter 41 des Heizelements 40 derartig ausgebildet ist, dass dieser ein temperaturabhängiges Widerstandsverhalten aufweist, insbesondere so, dass der Heizleiter 41 während seiner Einschaltphase die Größe des hindurchfließenden Stromes bestimmt, insbesondere verändert, insbesondere die Heizleistung in Abhängigkeit von dem sich ändernden Widerstand regelt, nämlich insbesondere mit zunehmenden Widerstand verringert. Der Heizleiter 41 weist z. B. einen positiven Temperaturkoeffizienten auf. Der zumindest eine Heizdraht 43 besteht aus einem solchen Material, das ein temperaturabhängiges Widerstandsverhalten hat. Aufgrund dessen kann die Heizeinrichtung 10 so gestaltet sein, dass deren Heizleiter 41 in einem unteren Temperaturbereich, der unterhalb der Ansprechtemperatur des thermostatischen Arbeitselements 11 liegt, zur Beheizung im Sinne schnelleres und/oder früheres und/oder weiteres Öffnen des Thermostatventils 12 insbesondere temperaturabhängig einschaltbar ist. So kann die Anordung z. B. so getroffen sein, dass der Heizleiter 41 in einem Temperaturbereich der Umgebungstemperatur des thermostatischen Arbeitselements 11 von bereits etwa 0°C bis etwa 50°C insbesondere temperaturabhängig einschaltbar ist. Aufgrund dessen ist es möglich, bereits bei niedrigen Temperaturen, die unterhalb der Ansprechschwelle des thermostatischen Arbeitselements 11 liegen, ein Öffnen des Hauptventils mit Ventilglied 22 zu erreichen dadurch, dass in diesem unteren Temperaturbereich mehr Heizleistung in den Kolben 15 eingebracht wird. Die elektrische Heizpatrone 13 ermöglicht somit eine variable Leistung derart, dass im unteren Temperaturbereich eine hohe Leistung eingebracht wird, damit ein Öffnen des Thermostatventils 12 bereits bei niedrigeren Temperaturen, und dabei auch eine schnelle Ventilöffnung, erfolgt. Auch ist erreichbar, dass das Thermostatventil 12 bei höheren Temperaturen schneller öffnet, wobei bei steigender Kühlmitteltemperatur dann die eingebrachte Heizleistung selbsttätig reduziert wird und dadurch die im Bereich der Heizpatrone 13 entstehende Temperatur reduziert wird, wodurch die Gefahr etwaiger Beschädigungen des thermostatischen Arbeitselements 11, insbesondere einzelner Bauteile dieses, wie z. B. des Dichtstopfens, der den Durchlass im Gehäuse 19 für den Kolben 15 abdichtet, vermieden ist. Aufgrund dessen ist somit erreicht, dass das thermostatische Arbeitselement 11 durch den Heizdraht 43, der selbsttätig die Heizleistung durch den sich temperaturabhängig ändernden Widerstand regulieren kann, selbsttätig die benötigte Heizleistung regelt. Somit ist es nicht erforderlich, dass in einem Steuergerät einer Brennkraftmaschine eine entsprechende Leistungsregelungsfunktion vorgehalten wird.

Die Erfindung ist z. B. mit Vorteil bei einem Thermostatventil 12 anwendbar, das - ausgehend von einer kalten Brennkraftmaschine - den Kühlmittelkreislauf beim Anlauf und Warmlauf der Brennkraftmaschine komplett unterbinden kann. Sobald im Bereich des Zylinderkopfes die eine Kühlung dort erforderlich machende Temperatur erreicht ist, die weit unterhalb der Ansprechtemperatur des thermostatischen Arbeitselements 11 liegt und z. B. im Bereich etwa von 0°C bis etwa 50°C liegen kann, wird in diesem unteren Temperaturbereich aufgrund der besonderen Gestaltung des Heizleiters 41 eine hohe Heizleistung eingebracht, um das Thermostatventil 12 auch bei derartigen tiefen Temperaturen bereits zu öffnen und bei höheren Temperaturen auch ein schnelleres Öffnen herbeizuführen, so dass dann mit Ventilöffnung die interne Kühlmittelzirkulation beginnen kann. Hiernach verringert der Heizleiter 41 die Heizleistung aufgrund zunehmenden Widerstands selbsttätig, wodurch Bauteile des Arbeitselements 11 keiner Beschädigungsgefahr ausgesetzt sind.

## Patentansprüche

1. Heizeinrichtung, insbesondere für ein thermostatisches Arbeitselement (11) eines Thermostatventils (12), mit einer elektrischen Heizpatrone (13), die innerhalb eines Gehäuses (16) ein elektrisches Heizelement (40) aufweist, das über herausgeführte elektrische Leitungen (44, 45) von einer elektrischen Stromquelle speisbar ist,
**dadurch gekennzeichnet,**
**dass** das Heizelement (40) aus zumindest einem Heizleiter (41) mit temperaturabhängigem Widerstandsverhalten gebildet ist.

2. Heizeinrichtung nach Anspruch 1,
**dadurch gekennzeichnet,**
**dass** der Heizleiter (41) während seiner Einschaltphase die Größe des hindurchfließenden Stromes bestimmt, insbesondere verändert.

3. Heizeinrichtung nach Anspruch 1 oder 2,
**dadurch gekennzeichnet,**
**dass** der Heizleiter (41) während seiner Einschaltphase die Heizleistung in Abhängigkeit von dem sich ändernden Widerstand regelt, insbesondere mit zunehmenden Widerstand verringert.

4. Heizeinrichtung nach einem der Ansprüche 1 bis 3,
**dadurch gekennzeichnet,**
**dass** der Heizleiter (41) einen positiven Temperaturkoeffizienten aufweist.

5. Heizeinrichtung nach einem der Ansprüche 1 bis 4,
**dadurch gekennzeichnet,**
**dass** der Heizleiter (41) aus zumindest einem Heizdraht (43) mit temperaturabhängigem Widerstandsverhalten gebildet ist.

6. Heizeinrichtung nach einem der Ansprüche 1 bis 5,
**dadurch gekennzeichnet,**
**dass** der Heizleiter (41) in einem unteren Temperaturbereich, der unterhalb der Ansprechtemperatur des thermostatischen Arbeitselements (11) liegt, zur Beheizung im Sinne schnelleres und/oder früheres und/oder weiteres Öffnen des Thermostatventils insbesondere temperaturabhängig einschaltbar ist.

7. Heizeinrichtung nach einem der Ansprüche 1 bis 6,
**dadurch gekennzeichnet,**
**dass** der Heizleiter (41) in einem Temperaturbereich der Umgebungstemperatur des thermostatischen Arbeitselements (11) von bereits etwa 0°C bis etwa 50°C insbesondere temperaturabhängig einschaltbar ist.

8. Heizeinrichtung nach einem der Ansprüche 1 bis 7,
**dadurch gekennzeichnet,**
**dass** der Heizleiter (41) aus zumindest einem gewickelten Heizdraht (43) innerhalb der Heizpatrone (13) besteht.

9. Heizeinrichtung nach einem der Ansprüche 1 bis 8,
**dadurch gekennzeichnet,**
**dass** die Heizpatrone (13) einen Kolben (15) eines thermostatischen Arbeitselements (11) bildet.

10. Thermostatventil für den Kühlmittelkreislauf einer Brennkraftmaschine, mit einem zumindest ein Ventilglied (22) betätigenden thermostatischen Arbeitselement (11), das einen in ein ein Wärmedehnmittel (20) enthaltendes Gehäuse (19) eintauchenden Kolben (15) aufweist, der als Heizpatrone (13) ausgebildet ist, die innerhalb eines Gehäuses (16) ein elektrisches Heizelement (40) aufweist, durch dessen Einschaltung der Arbeitsbereich des Arbeitselements (11) in Richtung früheres Öffnen des Thermostatventils (12) verschiebbar ist,
**dadurch gekennzeichnet,**
**dass** das elektrische Heizelement (40) aus zumindest einem Heizleiter (41) mit temperaturabhängigem Widerstandsverhalten gebildet ist.

11. Thermostatventil nach Anspruch 10,
**dadurch gekennzeichnet,**
**dass** der Heizleiter (41) in einem unteren Temperaturbereich der Umgebungstemperatur des Arbeitselements (11), der unterhalb der Ansprechtemperatur des Arbeitselements (11) liegt und z. B. bei etwa 0°C beginnt, zur Beheizung im Sinne schnelleres und/oder früheres und/oder weiteres Öffnen des Thermostatventils (12) insbesondere temperaturabhängig einschaltbar ist.

12. Thermostatventil nach Anspruch 10 oder 11,
**dadurch gekennzeichnet,**
**dass** der Heizleiter (41) die Heizleistung bei zunehmender Kühlmitteltemperatur, z. B. bei einem Temperaturbereich beginnend etwa ab 100°C oder höher, selbsttätigt reduziert.
